Europäisches Patentamt

European Patent Office

Office européen des brevets

(19)

(11) Veröffentlichungsnummer: **0 080 547**

A1

(12) **EUROPÄISCHE PATENTANMELDUNG**

(21) Anmeldenummer: 81810472.1

(22) Anmeldetag: 30.11.81

(51) Int. Cl.³: **D 03 C 1/00**
F 16 D 11/06

(43) Veröffentlichungstag der Anmeldung:
08.06.83 Patentblatt 83/23

(84) Benannte Vertragsstaaten:
CH DE FR LI

(71) Anmelder: GEBRÜDER SULZER
AKTIENGESELLSCHAFT
Zürcherstrasse 9
CH-8401 Winterthur(CH)

(72) Erfinder: Jülich, Werner
Riedenerstrasse 74
CH-8304 Wallisellen(CH)

(54) **Verfahren für den Betrieb einer Kupplungsanordnung zum Steuern der Schäfte einer Webmaschine und zugehörige Kupplungsanordnung.**

(57) Die Klinke (5) besitzt an ihrer Nase (3) zwischen der Kurzflanke (96) und der Basis (98) eine Schrägung (97). Dadurch wird es möglich, beim Einkuppeln der Klinke (5) in die Antriebswelle (1) den Kupplungsvorgang beginnen zu lassen, bevor die Nase (3) zentral gegenüber einer entsprechenden Nut (2) steht. Die Antriebswelle rotiert zu diesem Zeitpunkt noch. Die Klinke (5) trifft nach Ausschwenken der Haken (18) zunächst mit der entsprechend dem Umfang der Antriebswelle (1) gerundeten Basis (98a) bei 106 auf den Umfang (108) der Welle (1) auf. Bei weiterer Drehung der Welle (1) gleitet die Schrägung (97) der Nase (3) über die Rundung (99a) an der Welle (1). Die Kante (103) der Nase (3) steht in dieser Position bereits tiefer als die ihr entsprechende Kante (104) der Nut (2). Für das Einkuppeln steht eine relativ lange Zeitperiode innerhalb des Arbeitsspiels der Webmaschine zur Verfügung, weil das Einkuppeln bereits beginnen kann, bevor die Welle (1) stillgesezt ist und die Nase (3) zentral gegenüber der Nut (2) steht. Der Einkupplungsvorgang lässt sich überdies sicher gestalten, Einflüsse durch Maschinenschwingungen bleiben weitgehend unschädlich. Auch werden die Kupplungsteile (1, 5) geschont, weil das Abschlagen von Kanten (99, 104, 103) an Nase (3) und Welle (1) weitgehend vermieden werden kann.

Fig.1

EP 0 080 547 A1

T.595/Wl/Wh

**Gebrüder Sulzer, Aktiengesellschaft, Winterthur / Schweiz**

Verfahren für den Betrieb einer Kupplungsanordnung zum Steuern der Schäfte einer Webmaschine und zugehörige Kupplungsanordnung

Die Erfindung betrifft ein Verfahren für den Betrieb einer Kupplungsanordnung zum Steuern der Schäfte einer Webmaschine, mit einer mindestens eine Nut aufweisenden, intermittierend drehenden Antriebswelle und einer in die Nut mit einer Nase einkuppelbaren, auf einem auf der Antriebswelle drehbar gelagerten Exzenter angeordneten Klinke, sowie mit einer den Exzenter umschliessenden Lasche einer Kurbelstange für den Antrieb zu den Schäften. Ferner betrifft die Erfindung eine zugehörige Kupplungsanordnung zur Durchführung des Verfahrens. (Unter "Grundfläche" (Basis) der Nase der Klinke soll im folgenden die im wesentlichen parallel zum Umfang der Antriebswelle stehende Fläche der Nase der Klinke verstanden werden).

Bei einem bisherigen Verfahren der genannten Art und der zugehörigen Kupplungsanordnung (DE-AS 17 10 190) besitzt die Nase Flanken, die einen Winkel von im wesentlichen $90^{o}$ zu der angrenzenden Grundfläche bilden. Bei einem solchen nahezu senkrechten Eingriff der Nase in die zugehörige Nut kann die Nase beim Kupplungsvorgang erst dann in die Nut abgesenkt

0080547

werden, wenn die Nut vollständig (zentral) gegenüber der Nase steht, wobei die Antriebswelle und damit ihre Nut zum Stillstand gekommen sind. Senkrecht stehende Flanken wurden bisher deshalb verwendet, weil bei ihnen in Kupplungsstellung der Teile praktisch keinerlei Gefahr besteht, dass die Mitnahmekräfte Kraftkomponenten erzeugen, durch welche das unerwünschte Auskuppeln der Klinke während des Betriebes begünstigt werden könnte. Es besteht bei Kupplungsstellung Selbsthemmung.

Bei einer anderen, bekannten Ausführungsform (DE-AS 27 41 200) verlaufen die Flanken der Nase auf die ganze Länge schräg gegenüber der Grundfläche. Hierbei besteht -- durch die Schrägstellung der Flanken in der Kupplungsposition der Teile -- während des Betriebes eine relativ grosse, nach aussen gerichtete Kraftkomponente seitens der Mitnahmekraft der Welle, durch welche das unbeabsichtigte Auskuppeln während des Betriebes begünstigt wird. Es besteht keine Selbsthemmung.

Der Erfindung liegt die Aufgabe zugrunde, eine besonders in dieser Hinsicht verbessertes Verfahren für den Betrieb einer Kupplungsanordnung sowie eine entsprechende Kupplungsanordnung zu schaffen.

Die Erfindung besteht darin, dass die Klinke -- zum Einkuppeln in die Antriebswelle -- mit ihrer Nase in die Nut der Antriebswelle abgesenkt wird, bevor die Nase zentral vor der Nut steht. Hierdurch lässt sich erreichen, dass für den Einkupplungsvorgang ein grösseres Zeitintervall zur Verfügung steht. Es wird daher möglich, mit höheren Drehzahlen zu fahren und gleichwohl auf zuverlässige Weise die Kupplung zu betätigen.

Ferner lässt sich vermeiden, dass Kanten an Nase und Nut in schädlicher Weise aufeinander schlagen. Abrieb oder Verletzung der Teile unterbleiben. Diejenigen Kanten, welche bei der Drehung zuletzt einander gegenüber stehen, gelangen in einer Position aneinander, wo die Nase bereits teilweise abgesenkt ist. Auch hier können also das Aufschlagen der Teile und entsprechende Beschädigung, sowie gegebenenfalls Betriebsstörungen durch verspätetes Absenken der Klinke etwa infolge von Maschinenschwingungen vermieden werden.

Weitere Merkmale ergeben sich aus der folgenden Beschreibung von Ausführungsbeispielen in Verbindung mit der Zeichnung und den Ansprüchen.

Fig. 1    ist ein Schnitt durch eine erfindungsgemäss ausgebildete Kupplungsanordnung zur Steuerung von Webschäften einer Webmaschine,

Fig. 1a   zeigt eine andere Position der Teile nach Fig. 1

Fig. 2    erläutert eine zugehörige Einzelheit in grösserem Massstab.

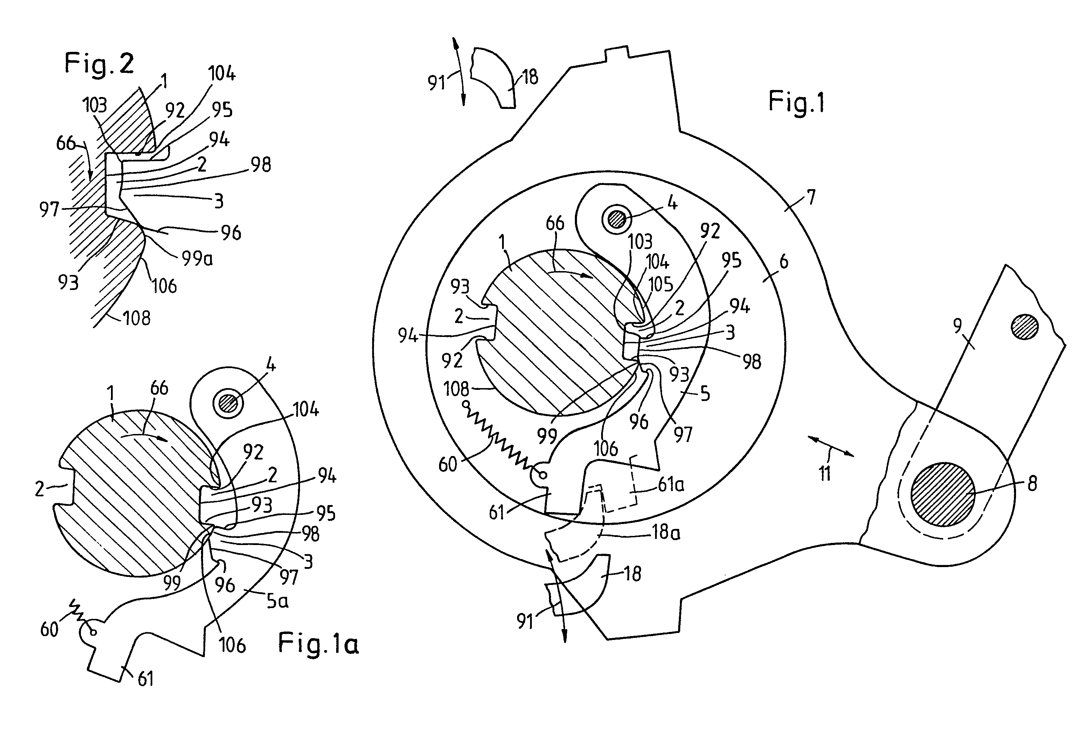

Eine von der Hauptwelle der Webmaschine aus absatzweise jeweils um 180° in Drehung versetzte Antriebswelle 1 enthält zwei Nuten 2, in welche die Nase 3 einer bei 4 schwenkbar gelagerten, unter Wirkung einer Zugfeder 60 stehenden Kupplungsklinke 5 eingreifen kann. Die Klinke 5 ist auf einem auf Welle 1 drehbar gelagerten Exzenter 6 gelagert, der von einer Lasche 7 umschlossen ist. Diese ist bei 8 an einem Uebertragungsgestänge 9 angelenkt, über welches die gemäss Pfeil 11 entstehende Hin- und Herbewegung der Lasche 7 auf einen zugehörigen Schaft einer Webmaschine übertragen wird. Auf Welle 1 sind eine ganze Anzahl, z. B. sechs bis vierzehn der in Fig. 1 dargestellten Antriebsteile 6, 7 angeordnet, nämlich zu jedem Schaft der Webmaschine ein Exzenter 6 und eine Lasche 7. Die gesamten Teile 1, 6, 7 bilden die sogenannte Exzentermaschine für Antrieb und Steuerung sämtlicher Webschäfte der Webmaschine. Die Schäfte werden entsprechend einem Bindungsprogramm für die Kettfäden in Hoch- oder Tieffachstellung bewegt.

Zur Betätigung der Klinke 5 während des Betriebes sind zwei schwenkbar gelagerte Steuerhebel eingebaut, von denen nur die an den freien Steuerhebelenden befindlichen Haken 18 dargestellt sind. Diese Haken sind gemäss den Pfeilen 91 ein- (Position 18a) und ausschwenkbar (Position 18). In Fig. 1 sind die Haken 18 in der ausgeschwenkten, wirkungslosen Position dargestellt.

Jede Nut 2 besitzt zwei Flanken 92, 93 und eine dazwischen liegende Grundfläche (Basis) 94. Die zugehörige Nase 3 besitzt eine Flanke 95 von voller, den Flanken 92, 93 entsprechender Länge und eine verkürzte Flanke 96, die durch die stumpfwinklig angeordnete Schrägung 97 entsteht. Zwischen der Vollflanke 95 und der Schrägung 97 ist die Grundfläche (Basis) 98 angeordnet, die beim Einkuppeln bzw. nach dem Einkuppeln der Grundfläche (Basis) 94 einer gegenüberstehenden Nut 2 entspricht. Die Grundfläche ist mit einer Krümmung 98a versehen (vergl. Fig. 2), die gleich der Krümmung des Umfangs 108 der Welle 1 ist. Die Basis 98 der Nase 3 ist jedoch kürzer als die Basis 94 jeder Nut 2. Durch die Schrägung 97 ist der Winkel zwischen der Kurzflanke 96 und der Schrägung 97 einerseits sowie der Winkel zwischen der Schrägung 97 und der Basis 98 andererseits jeweils stumpf (wesentlich grösser als $90^{\circ}$).

Die Wirkungsweise ist folgende. Wenn gemäss dem Bindungsprogramm zwecks Einkuppeln der Klinke 5 in die Welle 1 die Steuerhebel und damit die Haken 18 in die in Fig. 1 dargestellte, wirkungslose Stellung ausgeschwenkt werden, schnappt
die Klinke 5 aus Position 61a unter Wirkung der Feder 60
nach innen. Die Steuerhebel bzw. die Haken 18 werden in einem Zeitpunkt ausgeschwenkt, zu dem die Grundfläche 98 noch
gegenüber dem Bereich 106 des Umfanges 108 der Antriebswelle
1 steht. Daher schlägt die Klinke 3 zunächst mit der Grundfläche 98 etwa bei 106 (Position in Fig. 1a) auf den Umfang
108 der Antriebswelle 1.

Bei weiterer Drehung der Welle 1 rutsch die Nase 3 mit der
Schräge 98 auf die Rundung 99 und anschliessend in die Nut 2.
In dieser Position ereicht die Welle 1 ihren Stillstand. Wie
ersichtlich, steht der durch die Teile 97, 96 gebildete Endbereich der Nase 3 beim Einkuppeln infolge der Drehung der
Antriebswelle 1 zuerst radial gegenüber den Teilen 93, 99
der Nut 2. Die entsprechenden Teile 95, 92 gelangen erst
später -- nach vollständigem Absenken bzw. Einkuppeln der
Klinke 5 in radialer, gegenseitige Gegenüberstellung zu einander. Es entsteht die Kupplungsposition der Teile, in der
die Kurzflanke 96 der Nase 3 in Berührung mit der Flanke 93
der Nut 2 und die Vollflanke 95 der Nase 3 in Berührung mit
der Flanke 92 der Nut 2 steht. Das Ausschwenken der Haken
18 und damit der Beginn des Kupplungsvorganges wird bereits
vollzogen, bevor die Nase 3 vollständig (zentral) gegenüber
der Nut 2 steht, also zu einer Zeit, zu der die Antriebswelle 1 noch in Drehung ist.

Wie aus Fig. 1, 2 ersichtlich, liegt Kante 103 der Nase 3
in der dargestellten Berührungsposition bereits tiefer als
die Kante 104 der Welle 1 angeordnet ist. Aus diesem Grund
wird mit grosser Sicherheit verhindert, dass die Klinke 5
etwa als Folge von Schwingungen der Maschine in unerwünschter Weise nochmals ausgeschwenkt werden und etwa mit ihrer Basis 98 auf den Bereich 105 des Umfanges 108 der Welle 1 gelangen kann, wodurch der Betrieb gestört würde.

Bei der Ausführungsform nach Fig. 2 ist zwischen der Flanke 93 der Nut 2 und dem Bereich 106 des Umfanges 108 eine mit der Schrägung 97 kooperierende Rundung 99a angebracht.

Patentansprüche

1. Verfahren für den Betrieb einer Kupplungsanordnung zum Steuern der Schäfte einer Webmaschine, mit einer mindestens eine Nut (2) aufweisenden, intermittierend drehenden Antriebswelle (1) und einer in die Nut (2) mit einer Nase (3) einkuppelbaren, auf einem auf der Antriebswelle (1) drehbar gelagerten Exzenter (6) angeordneten Klinke (5), sowie mit einer den Exzenter (6) umschliessenden Lasche (7) einer Kurbelstange für den Antrieb zu den Schäften, dadurch g e - k e n n z e i c h n e t , dass die Klinke (5) - zum Einkuppeln in die Antriebswelle (1) - mit ihrer Nase (3) in die Nut (2) der Antriebswelle (1) abgesenkt wird, bevor die Nase (3) zentral vor der Nut (2) steht.

2. Verfahren nach Anspruch 1, dadurch gekennzeichnet, dass die Klinke (5) abgesenkt wird (5a), bevor ihre Schrägung (97) gegenüber der -- der Schrägung (97) in Einkupplungsposition benachbarten -- Kante (99) der Nut (2) steht, so dass die Nase (3) zuerst mit ihrer Grundfläche (Basis) (98) auf den Umfang (108) der Antriebswelle (1) trifft bei (106).

3. Kupplungsanordnung zur Durchführung des Verfahrens nach Anspruch 1 oder 2, dadurch gekennzeichnet, dass derjenige Endbereich (96, 97) der Nase (3), welcher beim Einkuppeln -- aufgrund der Drehung der Antriebswelle (1) -- zuerst radial gegenüber dem entsprechenden Ende (93) der Nut (2) steht, mit einer Schrägung (97) versehen ist, welche zwischen einer im wesentlichen radial stehenden Flanke (96) der Nase (3) und einer Grundfläche (Basis) (98) der Nase (3) angeordnet ist.

4. Kupplungsanordnung nach Anspruch 3, dadurch gekennzeichnet, dass die Grundfläche (Basis) (98) der Nase (3) entsprechend dem Umfang (108) der Antriebswelle (1) gekrümmt ausgebildet ist (Fig. 2).

5. Kupplungsanordnung nach Anspruch 3 oder 4, dadurch gekennzeichnet, dass die an der Nase (3) angebrachte Schrägung (97) mit der benachbarten Flanke (96) und der Grundfläche (98) je einen stumpfen Winkel von ca. 120 - 150° aufweist.

6. Kupplungsnaordnung nach einem der Ansprüche 3 - 5, dadurch gekennzeichnet, dass die Schrägung (97) so gestaltet ist, dass die Nase (3) -- beim Berühren von Schrägung (97) und zugehöriger Kante (99) der Nut (2) -- mit der anderen, nicht abgeschrägten Nasenkante (103) tiefer in der Nut (2) steht, als die der nicht abgeschrägten Nasenkante (103 entsprechende Nutenkante (104) angeordnet ist.

7. Kupplungsanordnung nach einem der Ansprüche 3 - 6, dadurch gekennzeichnet, dass die -- der Schrägung (97) in Einkupplungsposition benachbarte -- Kante (99) der Nut (2) gerundet (99a) ist.

0080547

Fig.1

Fig.1a

Fig.2

Europäisches
Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 909 131 (KAISER)<br>* Seite 7, Zeile 1 - Seite 9, Zeile 25; Figur 1 * | 1 | D 03 C 1/00<br>F 16 D 11/06 |
| A | GB-A-1 238 743 (KÖHLER)<br>* Insgesamt * | 1 | |
| A | DE-C- 454 108 (SCHLOEMANN) | | |
| A,D | DE-A-2 741 200 (SULZER) | | |
| A,D | DE-A-1 710 190 (VERDOL) | | |

--- --- ---

RECHERCHIERTE
SACHGEBIETE (Int. Cl. ³)

D 03 C
F 16 D

Der vorliegende Recherchenbericht wurde für alle Patentansprüche erstellt

| Recherchenort | Abschlußdatum der Recherche | Prüfer |
|---|---|---|
| DEN HAAG | 02-08-1982 | BOUTELEGIER C.H.H. |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82